(19) Europäisches Patentamt

European Patent Office

Office européen des brevets

(11) **EP 1 370 501 B1**

(12) **FASCICULE DE BREVET EUROPEEN**

(45) Date de publication et mention
de la délivrance du brevet:
**06.12.2006 Bulletin 2006/49**

(21) Numéro de dépôt: **02701381.2**

(22) Date de dépôt: **01.02.2002**

(51) Int Cl.:
***C04B 5/06*** **(2006.01)**

(86) Numéro de dépôt international:
**PCT/FR2002/000395**

(87) Numéro de publication internationale:
**WO 2002/062720 (15.08.2002 Gazette 2002/33)**

(54) **PROCEDE DE TRAITEMENT OXYDANT DES LAITIERS D'ACIERIE POUR L'OBTENTION DE MATERIAUX CIMENTAIRES**

**VERFAHREN ZUR OXIDIERENDEN BEHANDLUNG VON STAHLSCHLACKEN ZUR HERSTELLUNG VON ZEMENTMATERIALIEN**

**METHOD FOR OXIDIZING TREATMENT OF STEEL PLANT SLAG TO OBTAIN CEMENT-BASED MATERIALS**

(84) Etats contractants désignés:
**AT BE CH CY DE DK ES FI FR GB GR IE IT LI LU MC NL PT SE TR**

(30) Priorité: **02.02.2001 FR 0101451**

(43) Date de publication de la demande:
**17.12.2003 Bulletin 2003/51**

(73) Titulaire: **LAFARGE**
**75116 Paris (FR)**

(72) Inventeurs:
• **MICHAUD POUPARDIN, Valérie**
**01220 LA BOISSE (FR)**
• **SORRENTINO, François**
**F-69330 Meyzieu (FR)**

(74) Mandataire: **Catherine, Alain et al**
**Cabinet Harlé & Phélip**
**7, rue de Madrid**
**75008 Paris (FR)**

(56) Documents cités:
**EP-A- 0 579 309        DE-A- 2 611 889**

**Description**

La présente invention concerne d'une manière générale le traitement des laitiers d'aciérie; en vue de leur conférer des propriétés d'un liant hydraulique.

Plus particulièrement, l'invention concerne un traitement des laitiers d'aciérie donnant des scories traitées dont la composition minéralogique en font des matériaux synthétiques ayant des performances accrues lors de l'utilisation pour la construction (granulats pour béton ou routiers, liants hydrauliques ou à potentiel hydraulique).

L'obtention de produits hydrauliques ou à potentiel hydraulique à partir de matières premières sans émission de $CO_2$ se heurte à des difficultés inhérentes à leur chimie et minéralogie défavorables pour l'obtention d'un liant.

Par défavorable, on entend que le produit obtenu ne sera utilisable, ni tout seul, ni éventuellement en mélange avec du ciment Portland parce qu'il ne donnera pas les performances de résistances voulues par les normes ou parce qu'il va engendrer des problèmes de gonflement et de destruction des structures. C'est le cas pour les scories LD (scories provenant des laitiers d'aciéries solidifiés et concassés).

Les scories LD sont des sous-produits de l'affinage des fontes hématites (fontes pauvres en phosphore) par le procédé de soufflage à l'oxygène. C'est un matériau riche en fer et en chaux ayant une composition minéralogique moyenne qui se situe dans l'assemblage formé de silicates dicalciques, ferrite de calcium et oxydes métalliques dont la composition chimique moyenne des composés principaux est la suivante :

| Composé | % en poids |
|---|---|
| CaO | 50 |
| $SiO_2$ | 13 |
| $Al_2O_3$ | 3 |
| MgO | 6 |
| Oxydes de fer | 28 |
| Fer libre | jusqu'à 20 |
| CaO libre | jusqu'à 10 |

L'utilisation des scories LD sous forme de granulats pour béton, ou pour la construction routière pour la réalisation de couches supérieures bitumées et celle des couches de fondation est limitée par la présence de chaux libre qui va créer des expansions de la chaussée ou du béton.

La transformation des scories LD en liant hydraulique suscite également beaucoup d'intérêt.

Le brevet FR-2.546.530 décrit le traitement de laitiers d'aciérie en vue de leur utilisation cimentaire.

Le traitement décrit dans ce brevet consiste à additionner au laitier liquide un composé (bauxite) qui apporte de l'alumine et un composé (aluminium) qui forme de l'alumine, à apporter la quantité de chaleur nécessaire pour dissoudre les composés dans le laitier et à soumettre le laitier à un brassage par l'oxygène.

La quantité du ou des composés susceptibles de former l'alumine ajoutée au laitier liquide est telle que le laitier traité contienne 5 à 25 % en poids d'alumine.

Bien que le brevet FR-2.546.530 indique que le laitier ainsi traité peut être utilisé comme liant hydraulique, notamment pour la fabrication du ciment, ce traitement ne permet pas d'obtenir un liant hydraulique en lui-même, susceptible de remplacer le ciment Portland en totalité.

Le brevet DE-2.611.889 décrit le traitement oxydant de résidus de l'industrie métallurgique par ajout de chaux suivi d'un refroidissement très rapide pour obtenir un granulat avec lequel on broie de 3 à 8 % en poids de gypse.

Les résidus métallurgiques traités comportent majoritairement du laitier de hauts fourneaux.

Plus précisément, ce procédé décrit un procédé de transformation de 60 à 90 % de déchets métallurgiques par ajout de 10 à 40 % en poids de chaux. Cependant, les déchets ainsi traités sont constitués de 35 % de laitier d'aciérie, mélangé à 48 % de laitier de haut fourneau et à 17 % d'autres déchets sidérurgiques. En fait, on ne traite qu'environ 20 à 32 % de laitier d'aciérie.

Les laitiers LD traités par ce procédé ont une teneur relativement faible en CaO (< 45 % en poids) et une teneur élevée en $Fe_2O_3$ (> 30 % en poids). En outre, le traitement s'effectue à une température élevée de 1.600 à 1.750°C, préférentiellement de 1.650 à 1.700°C et nécessite l'emploi d'un combustible additionnel, tel que du coke.

La Demanderesse connaît un traitement oxydant des laitiers d'aciérie qui comprend l'ajout au laitier d'une source d'alumine et d'une source de chaux et un refroidissement approprié pour obtenir un laitier traité dont la composition minéralogique répond à l'une des constitutions suivantes :

(a) une phase vitreuse amorphe ;

(b) un premier assemblage de phases (1) constitué, en pourcent en poids, de 10-40 CA, 20-50 C2AS, 30-50 C6AF2 et 10-30 C2S ;

(c) un deuxième assemblage de phases (2) constitué de, en pourcent de poids, 20-40 C2F,10-30 C2AS, 20-50 C6AF2 et 10-40 C2S ; et

(d) un mélange d'une phase vitreuse amorphe et du premier ou du second assemblage de phases.

On rappelle que selon la notation classique des cimentiers :

C=CaO
A = $Al_2O_3$
S = $SiO_2$
F = $Fe_2O_3$
P = $PO_4$

Les phases ci-dessus ne sont pas des composés purs, mais peuvent contenir en solution solide des impuretés comme ie fer, ia magnésie (MgO), le phosphore ($P_2O_5$), le soufre, etc.

Outre le fait que ce procédé nécessite l'emploi de refroidissements réglés, les quantités de sources d'alumine et de chaux ajoutées sont importantes, généralement de 25 % en poids ou plus pour la source d'alumine et de 40 % en poids ou plus pour la source de chaux.

La présente invention a donc pour objet un procédé de traitement oxydant d'un laitier d'aciérie brut contenant, par rapport au poids total du laitier brut, au moins 45 % en poids de CaO et moins de 30 % en poids de $Fe_2O_3$, qui remédie aux inconvénients de l'art antérieur.

Plus particulièrement, la présente invention a pour objet un procédé de traitement oxydant d'un laitier d'aciérie brut conduisant à un laitier qui, en mélange avec du ciment Portland ou seul, constitue un liant hydraulique convenable, ayant une teneur en C3S de 40 à 60%, ce qui permet d'atteindre des résistances mécaniques acceptables, en particulier une résistance à la compression Rc à 1 jour supérieure à 8 M Pa.

La présente invention a aussi pour objet un procédé de traitement oxydant d'un laitier d'aciérie tel que défini ci-dessus, qui nécessite de faibles quantités d'ajouts de source de chaux et éventuellement de sources d'alumine et/ou de silice.

Le laitier à traiter doit avoir une teneur minimale en Fer (sous forme FeO ou Fe2O3) telle que le laitier final ait une teneur en Fe2O3 de 13% en poids minimum. Ceci permet d'utiliser des températures de traitement relativement faibles (égales ou inférieures à 1.500°C - le laitier sort de la poche de sidérurgie à une température de l'ordre de 1650°C et se refroidit naturellement jusqu'à 1450°C. On estime que le traitement a lieu à une température proche de 1500°C) et qui ne nécessitent pas d'apport énergétique autre que celui fourni par la combustion de l'oxygène, en particulier qui ne nécessitent pas l'emploi de combustible additionnel tel que du coke.

Les buts ci-dessus sont atteints, selon l'invention, par un procédé de traitement d'un laitier d'aciérie brut pour le transformer en un liant hydraulique au moins équivalent à un clinker de ciment Portland, comprenant :

- le traitement par oxydation avec un apport d'oxygène, ou d'air ou leur mélange à une pression variant de 1 à 15 bars, de préférence entre 5 et 10 bars, à une température allant de 1650° à 1400°C, de préférence allant de 1550°C à 1450°C d'un laitier d'aciérie brut contenant, par rapport au poids total du laitier brut, au moins 45 % en poids de CaO et moins de 30 % en poids de $Fe_2O_3$ ; et

- l'ajout à ce laitier d'une source de chaux complétée au besoin d'une source de silice et/ou d'une source d'alumine, les proportions de source de chaux et éventuellement de sources de silice et/ou d'alumine étant choisies pour que le laitier ait, après transformation et à température ambiante, un taux de $Fe_2O_3$ d'au moins 13 % en poids et une composition minéralogique comprenant au moins 40 % en poids de phase $C_3S$ et plus de 10 % en poids, de préférence au moins 40 % en poids, de ferrites de calcium sous forme de phase $C_2F$ et/ou $C_4AF$, par rapport au poids total du laitier final traité.

De préférence, le procédé de traitement selon l'invention s'effectue sans apport d'énergie autre que celle provenant de la combustion de l'oxygène.

De préférence également, le laitier traité final contient moins de 2 %, de préférence moins de 1 % en poids de chaux libre et mieux n'en contient pas du tout.

Comme indiqué précédemment, les laitiers d'aciérie bruts traités par le procédé de l'invention contiennent au moins 45 % en poids de CaO, généralement de 45 % à 65 % en poids de CaO et préférentiellement de 48 à 62 % en poids par rapport au poids total de laitier brut.

Également, les laitiers bruts contiennent moins de 30 % en poids de $Fe_2O_3$, de préférence moins de 30 % à 10 % en poids de $Fe_2O_3$ et mieux de 25 % à 10 % en poids par rapport au poids total du laitier brut.

Le taux de $Fe_2O_3$ dans le laitier traité final est d'au moins 13 % en poids, de préférence de 15 % à 35 %.

De préférence, le laitier initial à traiter contient de 5 à 20% de FeO.

De préférence encore, les proportions des ajouts sont telles que le laitier, après transformation et à température ambiante, a une composition minéralogique comportant moins de 10 % en poids de phase $C_2S$ et mieux est exempte de phase $C_2S$.

Avec le traitement décrit ci-dessus, on obtient un liant hydraulique qui se comporte comme un clinker de ciment Portland.

Pour obtenir un liant hydraulique, à partir des laitiers d'aciéries traités selon l'invention, équivalent à un ciment Portland, on ajoute au laitier traité ci-dessus, lors du broyage du laitier, une source de sulfate de calcium, par exemple du gypse ou de l'anhydrite, pour améliorer la cinétique d'hydratation du laitier.

Généralement la quantité du gypse ou d'anhydrite ajoutée est d'au moins 5 %, de préférence d'au moins 10 %, en poids par rapport au poids du laitier traité.

On peut également, pour obtenir, à partir des laitiers d'aciérie traités selon l'invention, un liant hydraulique équivalent à un ciment Portland, mélanger au moins 50 % en poids de ciment Portland au laitier traité et broyé.

L'oxydation du laitier d'aciérie brut peut être réalisée soit sur le laitier liquide à une température de 1.400°C à 1.650°C, de préférence de 1450°C à 1550°C par exemple par insufflation d'oxygène, d'air ou d'un mélange d'oxygène et d'air dans la poche contenant le laitier brut liquide, soit sur le laitier solide, par exemple par simple contact du laitier brut avec l'air dans un four rotatif d'une cimenterie.

De même, les ajouts de la source de chaux et les ajouts éventuels de sources d'alumine et/ou de silice peuvent se faire dans le laitier brut liquide ou solide. Ces ajouts peuvent être effectués avant, pendant ou après l'oxydation du laitier brut.

Bien évidemment, lorsque le laitier brut est sous forme solide, il doit être chauffé à une température suffisante pour obtenir la transformation souhaitée, généralement une température de 1.450°C à 1.550°C, typiquement de l'ordre de 1500°C.

La source de chaux peut être toute source de chaux appropriée telle que la chaux ou un carbonate de calcium.

De même les sources d'alumine et de silice peuvent être l'alumine pure ou la silice pure, ou encore de la bauxite.

La quantité de chaux ajoutée dépend bien évidemment de la composition chimique du laitier brut et peut aller jusqu'à 30 % en poids par rapport au poids du laitier brut, mais de préférence est de 5 à 15 % en poids, de préférence 8 à 15 % en poids.

La quantité d'alumine ajoutée varie généralement de 0 à 10% en poids, cependant que la quantité de silice varie généralement de 0 à 5 % en poids par rapport au poids de laitier brut.

Pour connaître la teneur des ajouts à effectuer au laitier afin d'obtenir un produit comprenant entre 40 et 60% de C3S, il faut procéder de la façon suivante, en considérant que la composition du laitier est la suivante :

| % CaO | % SiO2 | %Al2O3 | % Fe2O3 | % FeO | % P2O5 | % TiO2 |
|-------|--------|--------|---------|-------|--------|--------|
| Y | Z | A | U | V | P | T |

Pour connaître l'ajout de silice :

Si $Z < 10.52$, il faudra ajouter une quantité Z' de silice comprise entre $(10.52 - Z)$ (pour atteindre 40% de phase C3S) et $(15.8 - Z)$ (pour atteindre 60% de phase C3S)

Si $10.52 \leq Z < 15.8$, on pourra ajouter une quantité Z' de silice allant jusqu'à $(15.8 - Z)$

Si $Z \geq 15.8$ : il est inutile d'ajouter de la silice au laitier.

L'ajout d'alumine améliore les propriétés du produit issu du traitement du laitier. Cependant, l'alumine est un produit coûteux, et souvent, il sera rentable de n'en ajouter que quelques pourcents. On note A' l'ajout d'alumine.

La quantité de chaux à ajouter est alors donnée par le calcul suivant :

$$\% \; CaO_{aj} = (A+A')*1.10 + (Z+Z')*2.8 + (U+V*1.12)*0.7 + P*1.18 + T*.07 - Y$$

Le refroidissement du laitier d'aciérie après traitement doit être effectué de manière à favoriser la formation de la phase C3S. La vitesse de refroidissement varie généralement de 50 à 100°C/minute.

La suite de la description se réfère aux figures annexées qui représentent, respectivement :

- **-** Figure 1 : une micrographie de laitier d'un exemple comparatif, et
- **-** Figure 2 : une micrographie de laitier selon l'invention.

Dans les exemples suivants, sauf indications contraires, tous les pourcentages et parties sont exprimés en poids.

1- Laitiers d'aciérie.

Pour illustrer la présente invention, on a utilisé les laitiers d'aciérie dont les compositions chimiques et minéralogiques sont données dans le tableau ci-après.

TABLEAU I

| Laitier d'aciérie n° | Composition chimique (% en poids) | | | | | | | | | Composition minéralogique (% en poids) | | | | |
|---|---|---|---|---|---|---|---|---|---|---|---|---|---|---|
| | $SiO_2$ | $AL_2O_3$ | $Fe_2O_3$ | CaO | MgO | $TiO_2$ | $Mn_2O_3$ | $P_2O_5$ | FeO | Ferrite de Ca | Wüstite (SS) | $C_2S/C_3P$ (SS) | CaO libre | Périclase |
| 1 | 14.43 | 3.00 | 14.43 | 49.3 | 4.69 | 0.63 | 1.96 | 1.41 | 10.57 | 32 | 17 | 44 | 7 | 0 |
| 2 | 11.12 | 1.85 | 12.6 | 48.8 | 4.5 | 0.6 | 1.86 | 1.34 | 9.76 | 27 | 12.7 | 40 | 10 | 1.9 |
| 3 | 11.7 | 0 | 26,1 | 49 | 1 | 0.1 | 0.3 | 0.2 | 11.6 | 45 | 11.6 | 34.4 | 8 | 0 |
| 4 | 15.1 | 0 | 17.5 | 56.7 | 0.7 | 0.1 | 0.5 | 0.4 | 9 | 37 | 10.6 | 44.7 | | 0 |
| 5 | 14 | 6.5 | 12.8 | 58.1 | 0.1 | 0.3 | 0.1 | 0.4 | 7.7 | 34.6 | 15.2 | 40.1 | 10 | 0 |

Wüstite SS : Solution solide (Fe, Ca, Mg) O
$C_2S/C_3P$ SS : solution solide $C_2$ (S, Px)

2 - Exemples comparatifs C 1 à C 21

On a oxydé et éventuellement traité les laitiers ci-dessus avec des ajouts de chaux et/ou d'alumine et/ou de silice en dehors du domaine de la présente invention. La température au début du traitement est de 1650°C (température de sortie de la poche de sidérurgie contenant le laitier) et de 1450°C en fin de traitement. La pression d'oxygène utilisée est de 200 kPa (2 atmosphères) et la durée totale du traitement est de 30 minutes.

La nature et la quantité d'ajouts ainsi que les compositions chimiques et minéralogiques obtenues sont données dans les tableaux II et III.

TABLEAU II

| Exemple n° | Laitier N° | % laitier | Ajouts | | |
|---|---|---|---|---|---|
| | | | CaO | Al$_2$O$_3$ | SiO$_2$ |
| C 1 | 1 | 100 | - | - | - |
| C 2 | 1 | 97 | - | - | 3 |
| C 3 | 1 | 94 | 3 | - | 3 |
| C 4 | 1 | 91 | 6 | - | 3 |
| C 5 | 1 | 88 | 9 | - | 3 |
| C 6 | 1 | 85 | 12 | - | 3 |
| C 7 | 1 | 94 | - | - | 6 |
| C 8 | 1 | 88 | 6 | - | 6 |
| C 9 | 1 | 82 | 12 | - | 6 |
| C 10 | 1 | 76 | 18 | - | 6 |
| C 11 | 1 | 74 | 20 | - | 6 |
| C 12 | 1 | 90 | - | - | 10 |
| C 13 | 1 | 88 | 8 | 2.4 | 0.5 |
| C 14 | 1 | 86 | 10 | 2.4 | 0.5 |
| C 15 | 1 | 94 | - | 1.8 | 3.4 |
| C 16 | 1 | 96 | - | 2.4 | 0.5 |
| C 17 | 1 | 93 | 5 | 1.2 | 0.25 |
| C 18 | 1 | 92 | 4 | 1.2 | 2.25 |
| C 19 | 1 | 95 | 3 | 1.2 | 0.25 |
| C 20 | 2 | 90 | 4 | 1.2 | 4.25 |
| C 21 | 1 | 83 | 12 | 3 | 0.62 |

Nota : dans les exemples C16 à C21, la somme des composés laitier + C+A+S ne fait pas 100% car l'ajout d'alumine est fait sous forme de bauxite, qui introduit notamment un certain pourcentage en Fer (la composition moyenne de la bauxite ajoutée est donnée ci-dessous :
• 60% de Al2O3,
• 12.5% de SiO2 et
• 27.5% de Fe2O3

TABLEAU III

| Exemple n° | Composition minéralogique (% en poids) | | | % Fe2O3 |
|---|---|---|---|---|
| | $C_3S$ | $C_2S$ | CS | |
| C 1 | 0 | 46 | 0 | 25 |
| C 2 | 0 | 32 | 13 | 24 |
| C 3 | 0 | 41 | 7 | 23 |
| C 4 | 12 | 56 | 0 | 22 |
| C 5 | 12 | 39 | 0 | 22 |
| C 6 | 24 | 28 | 0 | 21 |
| C 7 | 0 | 24 | 24 | 23 |
| C 8 | 0 | 39 | 11 | 22 |
| C9 | 3 | 51 | 0 | 20 |
| C 10 | 26 | 32 | 0 | 19 |
| C11 | 35 | 23 | 0 | 18 |
| C 12 | 0 | 9 | 40 | 23 |
| C 13 | 13 | 31 | 0 | 23 |
| C 14 | 22 | 22 | 0 | 22 |
| C 15 | 0 | 22 | 20 | 24 |
| C 16 | 0 | 32 | 8 | 25 |
| C 17 | 9 | 35 | 0 | 24 |
| C 18 | 0 | 39 | 5 | 24 |
| C 19 | 7 | 37 | 0 | 24 |
| C 20 | 25 | 22 | 0 | 23 |
| C 21 | 25 | 20 | 0 | 22 |

Ces essais C1 à C21 représentent des matériaux dont les performances ne sont pas satisfaisantes, la proportion de phase hydraulique C3S qu'ils contiennent étant trop faible.

L'essai C1 montre que la seule oxydation sans apport minéraux du laitier d'aciérie brut a pour effet de faire disparaître la wüstite (FeO) et la création d'une phase C2S peu hydraulique.

L'addition de silice (essais C2, C7, C12) conduit à la disparition d'une partie de C2S au profit d'une phase non hydraulique (CS).

Si on ajoute, en plus de la silice, des quantités croissante de chaux, (essais C3 à C6 ou C8 à C11), on augmente de pourcentage de phases hydrauliques (C3S)

Il est parfois plus économique d'apporter les ajouts sous forme de minéraux naturels tels que la bauxite (amenant essentiellement A, S et des oxydes de fer). L'addition de bauxite seule amènera un résultat équivalent à l'addition de S et d'A (essai C16). L'addition de S à un ajout de bauxite accentuera l'apparition de phases non hydrauliques telles que CS (essai C15)

L'addition de chaux à la bauxite (essais C13, C14, C17, C19, C21) amènera l'apparition de la phase C3S, comme dans le cas de l'addition de silice seule.

Dans le cas de l'addition de silice et d'alumine, il faudra donc ajouter plus de chaux pour compenser l'apport de silice et d'alumine (essais C18, C20), les proportions de chaux à ajouter dépendant des teneurs respectives en silice, alumine et chaux des laitiers traités.

On voit ainsi que si l'on fait des ajouts qui ne correspondent pas aux valeurs données par les équations, les composés obtenus ne permettent pas d'obtenir les pourcentages de phase C3S recherchées.

3 - Exemples n° 1 à 6

On a traité les laitiers d'aciérie bruts par oxydation à une pression d'environ 10 bars, pendant 30 minutes, avec ajouts de chaux et éventuellement d'alumine et de silice selon l'invention. La température de début de traitement est de 1650°C (température du laitier à la sortie de la poche de sidérurgie)

Les laitiers utilisés, les proportions des ajouts et les phases minéralogiques obtenues sont indiqués dans les tableaux IV et V ci-dessous.

TABLEAU IV

| Exemple n° | Laitier N° | % laitier | Ajouts | | |
|---|---|---|---|---|---|
| | | | CaO | Al$_2$O$_3$ | SiO$_2$ |
| 1 | 3 | 90 | 10 | - | - |
| 2 | 5 | 89 | 9 | - | 2 |
| 3 | 6 | 95 | 5 | - | - |
| 4 | 1 | 89 | 11 | - | - |
| 5 | 1 | 88 | 12 | - | - |
| 6 | 1 | 82 | 15 | 3 | - |

TABLEAU V

| Exemple n° | Composition minéralogique (% en poids) | | | | % Fe2O3 |
|---|---|---|---|---|---|
| | C$_3$S | C$_2$S | CS | Solution solide de ferrite C2F/C4AF | |
| 1 | 42 | - | - | 58 | 34 |
| 2 | 55 | - | - | 41 | 24 |
| 3 | 54 | - | - | 47 | 20 |
| 4 | 44 | 6 | - | 46 | 22 |
| 5 | 48 | 3 | - | 45 | 22 |
| 6 | 47 | 1 | - | 48 | 20 |

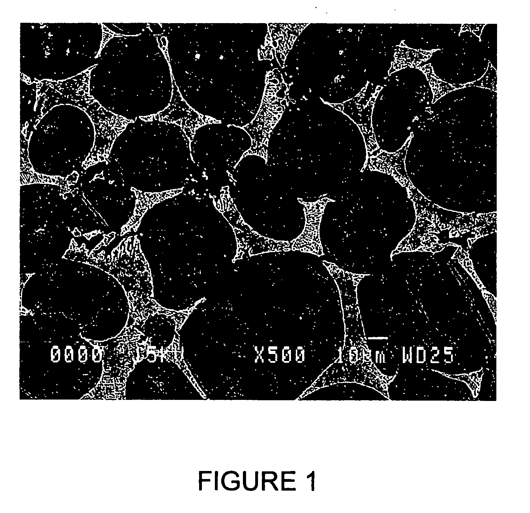

La figure 1 est une micrographie de l'exemple C8. Les "billes" présentes sur cette micrographie sont du C2S, la phase interstitielle étant composée de CS et de la phase ferritique.

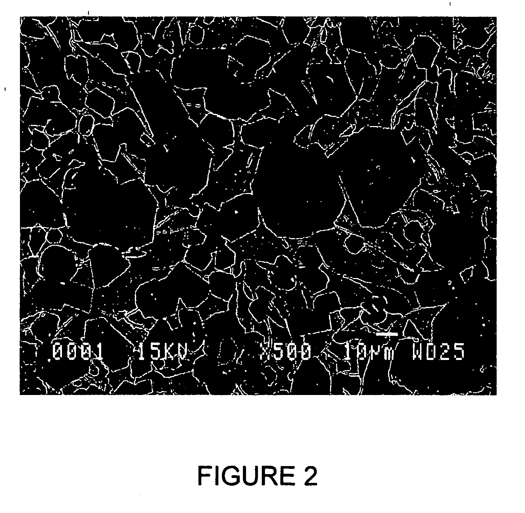

La figure 2 est une micrographie de l'exemple 3. Les "prismes" présents sur cette micrographie sont du C3S, la phase interstitielle étant composée de phase ferritique.

Deux séries d'essais applicatifs ont été réalisées à partir de laitiers traités issus, soit des exemples comparatifs C1 à C21, soit des exemples 1 à 6 selon notre invention.

Dans la première série dont les résultats sont donnés dans le tableau VI-A, chacun des laitiers a été mélangé dans un rapport pondéral 50/50 avec du ciment Portland.

Des éprouvettes de mortier normalisés ont été confectionnées avec chacun de ces mélanges, selon la norme EN 196-1, et les résistances mécaniques à la compression mesurées à 1 jour et 28 jours ;

Les résultats sont donnés après avoir regroupé les différents laitiers traités par classes, en fonction de leur teneur en phase C$_3$S.

Pour chaque classe, les valeurs des résistances mécaniques spécifiées sont les minimum et maximum obtenus, selon le laitier considéré.

TABLEAU VI - A

| % poids phase $C_3S$ | 0 | 1-7 | 7-15 | 20-30 | 35 | 40-50 | > 50 |
|---|---|---|---|---|---|---|---|
| Laiters traités n° | C1/C2/C3/C7/C8/C12/C15/C16 | C4/C9/C18 | C5/C13/C17/C19 | C6/C10/C14/C20/C21 | C11 | 1/4/5/6 | 2/3 |
| Ciment Portland % poids | 50 | 50 | 50 | 50 | 50 | 50 | 50 |
| Rc1jour MPa | 4-6 | 4-6 | 4-6 | 4-6 | 6-8 | 10-14 | 3-17 |
| Rc 28Jours MPa | 13-17 | 20-24 | 32-38 | 36-44 | 42-52 | 45-55 | 50-60 |

Dans la deuxième série dont les résultats sont donnés dans le tableau VI - B ci dessous, chacun des laitiers a été broyé avec 10% de gypse et les mêmes essais ont été réalisés que dans la série précédente.

TABLEAU VI - B

| % poids phase $C_3S$ | 0 | 1 - 7 | 7 - 15 | 20 - 30 | 35 | 40 - 50 | > 50 |
|---|---|---|---|---|---|---|---|
| Laiters traités n° | C2/C3/C7/C8/C12/C15/C16 | C4/C9/ C18 | C5/C13/C17/C19 | C6/C10/C14/C20/C21 | C11 | 1/4/5/6 | 2/3 |
| Gypse % poids | 10 | 10 | 10 | 10 | 10 | 10 | 10 |
| Rc1jour MPa | 0 | 0 | 0 | 1-3 | 1-3 | 10-14 | 13-17 |
| Rc 28Jours MPa | 0 | 1-3 | 9-11 | 18-22 | 20-24 | 34-42 | 39-47 |

Les résultats obtenus montrent que les laitiers traités selon l'invention, contrairement à ceux des exemples comparatifs, permettent d'obtenir des résistances mécaniques en compression, selon la norme EN 196-1, nettement supérieures à 8Mpa à 1 jour, que ces laitiers soient mélangés ou non avec un ciment Portland.

Les résistances mécaniques à 28 jours sont celles d'un Ciment Portland qui correspond, selon la norme EN-197-1, aux classes 32,5 ou 42,5 .

**Revendications**

1. Procédé de traitement d'un laitier d'aciérie brut pour le transformer en un liant hydraulique au moins équivalent à un clinker de ciment Portland, comprenant :

   - le traitement par oxydation avec un apport d'oxygène, d'air ou de leur mélange à une pression variant de 1 à 15 bars, de préférence entre 5 et 10 bars, à une température allant de 1650°C à 1400°C, de préférence de 1550°C à 1450°C d'un laitier d'aciérie brut contenant, par rapport au poids total du laitier brut, au moins 45 % en poids de CaO et moins de 30 % en poids de $Fe_2O_3$ ; et
   - l'ajout à ce laitier d'une source de chaux complétée au besoin d'une source de silice et/ou d'une source d'alumine, les proportions de source de chaux et éventuellement de sources de silice et/ou d'alumine étant choisies pour que le laitier ait, après transformation et à température ambiante, un taux de $Fe_2O_3$ d'au moins 13 % en poids et une composition minéralogique comprenant au moins 40 % en poids de phase minéralogique $C_3S$ et plus de 10 % en poids, de préférence au moins 40 % en poids de ferrite de calcium sous forme de phase minéralogique $C_2F$ et/ou $C_4AF$, par rapport au poids total du laitier traité final.

2. Procédé selon la revendication 1, **caractérisé en ce que** le traitement s'effectue sans apport d'énergie autre que celle provenant de la combustion de l'oxygène.

3. Procédé selon la revendication 1 ou 2, **caractérisé en ce que** le laitier traité final contient moins de 2 %, de préférence moins de 1 % en poids de chaux libre par rapport au poids total du laitier traité final.

4. Procédé selon l'une quelconque des revendications 1 à 3, **caractérisé en ce que** le laitier, après transformation et à température ambiante, comporte moins de 10 % en poids de phase minéralogique $C_2S$.

5. Procédé selon l'une quelconque des revendications 1 à 4, **caractérisé en ce que** la source de chaux est la chaux ou un carbonate de calcium.

6. Procédé selon l'une quelconque des revendications 1 à 5, **caractérisé en ce que** la source d'alumine est la bauxite.

7. Procédé selon l'une quelconque des revendications 1 à 6, **caractérisé en ce que** la quantité de chaux ajoutée est au plus de 30 % en poids par rapport au poids du laitier brut.

8. Procédé selon l'une quelconque des revendications 1 à 6, **caractérisé en ce que** la quantité de chaux ajoutée représente 5 à 15 % en poids du laitier brut.

9. Procédé selon l'une quelconque des revendications 1 à 8, **caractérisé en ce que** la quantité de source d'alumine ajoutée représente 0 à 10 % en poids du laitier brut et la quantité de source de silice ajoutée représenté 0 à 5 % en poids du laitier brut.

10. Procédé pour obtenir, à partir d'un laitier d'aciérie, un liant hydraulique équivalent à un ciment Portland **caractérisé en ce qu'**il consiste à mélanger au moins 50 % en poids de ciment Portland à un laitier résultant du procédé de traitement selon l'une quelconque de revendications 1 à 9, par rapport au poids de laitier traité final.

11. Procédé pour obtenir, à partir d'un laitier d'aciérie, un liant hydraulique équivalent à un ciment Portland, **caractérisé en ce qu'**il consiste à mélanger, à un laitier résultant du procédé selon l'une quelconque des revendications 1 à 9, au moins 5 %, de préférence au moins 10 % en poids d'une source de sulfate de calcium, par rapport au poids de laitier traité final.

12. Procédé selon la revendication 10, **caractérisé en ce que** la source de sulfate de calcium est le gypse ou l'anhydrite.

**Claims**

1.  A method for treating a raw steel industry slag, for converting same into a hydraulic binder at least equivalent to a Portland cement clinker, comprising:

    - an oxidative treatment process with an oxygen or air supply, or their mixture at a pressure ranging from 1 to 15 bars, preferably from 5 to 10 bars, at a temperature ranging from 1,650° C to 1,400°C, preferably ranging from 1,550°C to 1,450°C, for a raw steel industry slag containing, based on the raw slag total weight, at least 45% in weight of CaO and less than 30% in weight of $Fe_2O_3$; and
    - the addition, to such a slag, of a lime source supplemented, if necessary, with a silica source and/or an alumina source, the proportions of the lime source and, optionally, of the silica and/or alumina sources being selected such that the slag has, after conversion and at room temperature, a $Fe_2O_3$ rate of at least 13% in weight and a mineral composition comprising at least 40% in weight of the $C_3S$ mineral phase and more than 10% in weight, preferably at least 40% in weight, of calcium ferrite in the form of a $C_2F$ and/or $C_4AF$ mineral phase, based on the final treated slag total weight.

2.  A method according to claim 1, **characterized in that** the treatment occurs with no other energy supply than that resulting from the oxygen combustion.

3.  A method according to claim 1 or 2, **characterized in that** the final treated slag contains less than 2%, preferably less than 1 % in weight of free lime based on the final treated slag total weight.

4.  A method according to any one of claims 1 to 3, **characterized in that** the slag, after conversion and at room temperature, comprises less than 10% in weight of $C_2S$ mineral phase.

5.  A method according to any one of claims 1 to 4, **characterized in that** the lime source is lime or a calcium carbonate.

6.  A method according to any one of claims 1 to 5, **characterized in that** the alumina source is bauxite.

7.  A method according to any one of claims 1 to 6, **characterized in that** the lime amount to be added is at the most 30% in weight based on the raw slag weight.

8.  A method according to any one of claims 1 to 6, **characterized in that** the lime amount to be added accounts for 5 to 15 % in weight of the raw slag.

9.  A method according to any one of claims 1 to 8, **characterized in that** the alumina source amount to be added accounts for 0 to 10 % in weight of the raw slag and the silica source amount to be added accounts for 0 to 5 % in weight of the raw slag.

10. A method for obtaining, from a steel industry slag, a hydraulic binder equivalent to a Portland cement, **characterized in that** it consists in mixing at least 50 % in weight of Portland cement to a slag resulting from the treatment method according to any one of claims 1 to 9, based on the final treated slag weight.

11. A method for obtaining, from a steel industry slag, a hydraulic binder equivalent to a Portland cement, **characterized in that** it consists in mixing, to a slag resulting from the method according to any one of claims 1 to 9, at least 5%, preferably at least 10% in weight of a calcium sulphate source, based on the final treated slag weight.

12. A method according to claim 10, **characterized in that** the calcium sulphate source is gypsum or anhydrite.

**Patentansprüche**

1.  Verfahren zur Behandlung einer rohen Stahlschlacke unter Umwandlung derselben in ein hydraulisches Bindemittel, das einem Portlandzementklinker wenigstens äquivalent ist, umfassend:

    - Behandlung einer rohen Stahlschlacke, die, bezogen auf das Gesamtgewicht der rohen Schlacke, wenigstens 45 Gew.-% CaO und weniger als 30 Gew.-% $Fe_2O_3$ enthält, durch Oxidation mit einer Zuleitung von Sauerstoff, Luft oder deren Gemisch unter einem Druck, der von 1 bis 15 bar, vorzugsweise von 5 bis 10 bar, variiert, bei einer Temperatur von 1650°C bis 1400°C, vorzugsweise 1550 °C bis 1450°C; und

- Zugabe einer Kalkquelle, die nach Bedarf mit einer Siliciumdioxidquelle und/oder einer Aluminiumoxidquelle ergänzt ist, zu dieser Schlacke, wobei die Anteile der Kalkquelle und gegebenenfalls der Siliciumdioxid- und/oder Aluminiumoxidquelle so gewählt sind, dass die Schlacke nach der Umwandlung und bei Umgebungstemperatur einen $Fe_2O_3$-Gehalt von wenigstens 13 Gew.-% und eine mineralogische Zusammensetzung, die wenigstens 40 Gew.-% der mineralogischen Phase $C_3S$ und mehr als 10 Gew.-%, vorzugsweise wenigstens 40 Gew.-%, Calciumferrit in Form der mineralogischen Phase $C_2F$ und/oder $C_4AF$ umfasst, bezogen auf das Gesamtgewicht der endgültigen behandelten Schlacke, aufweist.

2. Verfahren gemäß Anspruch 1, **dadurch gekennzeichnet, dass** die Behandlung ohne weiteren Energieeintrag außer derjenigen, die aus der Verbrennung des Sauerstoffs stammt, erfolgt.

3. Verfahren gemäß Anspruch 1 oder 2, **dadurch gekennzeichnet, dass** die endgültige behandelte Schlacke weniger als 2 Gew.-%, vorzugsweise weniger als 1 Gew.-%, freien Kalk enthält, bezogen auf das Gesamtgewicht der endgültigen behandelten Schlacke.

4. Verfahren gemäß einem der Ansprüche 1 bis 3, **dadurch gekennzeichnet, dass** die Schlacke nach der Umwandlung und bei Umgebungstemperatur weniger als 10 Gew.-% der mineralogischen Phase $C_2F$ umfasst.

5. Verfahren gemäß einem der Ansprüche 1 bis 4, **dadurch gekennzeichnet, dass** es sich bei der Kalkquelle um Kalk oder ein Calciumcarbonat handelt.

6. Verfahren gemäß einem der Ansprüche 1 bis 5, **dadurch gekennzeichnet, dass** es sich bei der Aluminiumoxidquelle um Bauxit handelt.

7. Verfahren gemäß einem der Ansprüche 1 bis 6, **dadurch gekennzeichnet, dass** die hinzugefügte Kalkmenge höchstens 30 Gew.-% beträgt, bezogen auf das Gewicht der rohen Schlacke.

8. Verfahren gemäß einem der Ansprüche 1 bis 6, **dadurch gekennzeichnet, dass** die hinzugefügte Kalkmenge 5 bis 15 Gew.-% der rohen Schlacke beträgt.

9. Verfahren gemäß einem der Ansprüche 1 bis 8, **dadurch gekennzeichnet, dass** die hinzugefügte Menge der Aluminiumoxidquelle 0 bis 10 Gew.-% der rohen Schlacke beträgt und die hinzugefügte Menge der Siliciumdioxidquelle 0 bis 5 Gew.-% der rohen Schlacke beträgt.

10. Verfahren zur Gewinnung eines hydraulischen Bindemittels, das einem Portlandzement äquivalent ist, aus einer Stahlschlacke, **gekennzeichnet durch** den Schritt des Mischens von wenigstens 50 Gew.-% Portlandzement zu einer Schlacke, die aus einem Behandlungsverfahren gemäß einem der Ansprüche 1 bis 9 resultiert, bezogen auf das Gewicht der endgültigen behandelten Schlacke.

11. Verfahren zur Gewinnung eines hydraulischen Bindemittels, das einem Portlandzement äquivalent ist, aus einer Stahlschlacke, **gekennzeichnet durch** den Schritt des Mischens von wenigstens 5 Gew.-%, vorzugsweise wenigstens 10 Gew.-%, einer Calciumsulfatquelle zu einer Schlacke, die aus einem Behandlungsverfahren gemäß einem der Ansprüche 1 bis 9 resultiert, bezogen auf das Gewicht der endgültigen behandelten Schlacke.

12. Verfahren gemäß Anspruch 10, **dadurch gekennzeichnet, dass** es sich bei der Calciumsulfatquelle um Gips oder Anhydrit handelt.

FIGURE 1

FIGURE 2